# EUROPÄISCHE PATENTSCHRIFT

(11) **EP 2 614 194 B1**
(45) Veröffentlichungstag und Bekanntmachung des Hinweises auf die Patenterteilung: **17.06.2015**
(21) Anmeldenummer: 11748681.1
(22) Anmeldetag: 26.08.2011
(51) Int. Cl.: E04B 1/80, F16L 59/065

(54) **KÄLTEGERÄT MIT VAKUUMKÖRPER**
REFRIGERATOR WITH VACUUM BODY
RÉFRIGÉRATEUR AVEC MEMBRE SOUS VIDE

(30) Priorität: 10.09.2010 DE 102010040557
(43) Veröffentlichungstag der Anmeldung: 17.07.2013
(73) Patentinhaber: BSH Hausgeräte GmbH, 81739 München (DE)
(72) Erfinder: STELZER, Jörg, 89537 Giengen (DE); EHNINGER, Christian, 89537 Giengen an der Brenz (DE); SEELMEIER, Michael, 73572 Heuchlingen (DE)
(86) Internationale Anmeldenummer: PCT/EP2011/064746
(87) Internationale Veröffentlichungsnummer: WO 2012/031914

(56) Entgegenhaltungen:
- WO-A1-2009/141214
- DE-A1- 10 117 021
- DE-A1- 10 159 518
- US-A- 5 273 801

## Beschreibung

In Kältegeräten können zu Isolationszwecken evakuierte Vakuumkörper eingesetzt werden. Diese werden in der Regel als Vakuumpaneele gebildet und weisen ein eväkuierbares Füllmaterial auf, welches durch eine Außenhülle vakuumdicht umhüllt ist. Die Außenhülle kann beispielsweise aus Folie mit einer Foliendicke von ca. 80 µm bis ca. 150 µm bestehen.

Um bei einem evakuierten Vakuumkörper die Qualität des Vakuums bestimmen zu können, ist eine Messmöglichkeit des Drucks im Innenraum des Vakuumkörpers erwünscht. Zur Messung des Drucks können beispielsweise Wärmesensoren eingesetzt werden, wie sie in der Druckschrift DE 102 15 213 C1 beschrieben sind. Eine andere Möglichkeit der Druckmessung besteht in der Verwendung der Folienhubtechnik, wie sie beispielsweise in der Druckschrift JP 05142075 A beschrieben ist. Dabei wird der Druck über dem Vakuumkörper erniedrigt. Hierzu wird der Vakuumkörper in eine Vakuumkammer gelegt und evakuiert. Alternativ kann der Vakuumkörper auf eine Vakuumglocke aufgesetzt werden, welche evakuiert wird. Wird der Druck über dem Vakuumkörper niedriger als der Druck innerhalb des Vakuumkörpers, hebt sich die Außenhülle ab. Diese Abhebung kann beispielsweise unter Verwendung von Sensoren, wie beispielsweise Laserdistanzsensoren oder kapazitiven Sensoren, detektiert werden. Der Druck innerhalb des Vakuumkörpers hängt mit dem Folienhub zusammen und kann auf diese Weise erfasst werden.

Die vorstehend genannten Messverfahren sind jedoch bei komplexere, dreidimensionalen Vakuumkörpern, deren Außenhülle nicht aus einer Folie, sondern aus einem dickeren und somit im Vergleich zu einer Folie weniger elastischen Kunststoff geformt ist, nicht möglich.

Die Patentschrift US 5,273,801 zeigt ein Vakuumpaneel umfassend ein erstes Behälterelement, welches mittels einer Abdeckung verschlossen ist. Auf der Abdeckung ist eine undurchlässige Schicht aufgebracht.

Die Offenlegungsschrift DE 101 17 021 A1 zeigt ein Vakuumisolationselement und ein Verfahren zur Qualitätsprüfung eines Vakuumisolationselementes.

Die DE 101 59 518 A1 offenbart ein Vakuum-Isolations-Paneel mit einer Drucküberwachung, indem eine Folienumhüllung gleichzeitig als Meß-Membran dient, beispielsweise mit einem eine Piezofolie aus hochpolarisiertem PVC umfassenden Sensor.

Die WO 2009/141214 A1 offenbart eine Vakuum-Skin-Packung mit einem auf einer Schale angeordneten Produkt, die hergestellt wird, indem ein Produkt in einem Verfahren zum Vakuum-Skin-Verpacken verpackt wird. Gemäß der WO 2009/141214 A1 wird dabei das Produkt auf eine Schale mit einer Dicke zwischen beispielsweise 0,2 und 7 Millimetern gelegt, eine Folie mit einer Dicke vorzugsweise zwischen 50 bis 200 Mikrometern wird über die Schale gelegt und der Bereich zwischen der Schale und der Folie wird evakuiert.

Es ist daher die Aufgabe der vorliegenden Erfindung, ein Kältegerät mit einem Gehäuse, das zumindest einen Vakuumkörper aufweist, zu schaffen, welcher eine in Vergleich zu einer Folie weniger elastische Außenhülle aufweist und welcher dennoch einem Druckmessverfahren zugänglich ist.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Die Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass die obige Aufgabe durch ein Kältegerät mit einem Gehäuse, das zumindest einen Vakuumkörper aufweist, mit einer Außenhülle, welche zumindest zwei Außenhüllenbereiche unterschiedlicher Elastizität aufweist, gelöst werden kann, wobei die Außenhülle einen ersten Außenhüllenbereich und einen zweiten Außenhüllenbereich aufweist, welcher elastischer als der erste Außenhüllenbereich ist und eine geringere Dicke als der erste Außenhüllenbereich aufweist, wobei der erste Außenhüllenbereich eine Dicke aufweist, welche größer als 150 Mikrometer ist, und wobei der zweite Außenhüllenbereich eine Dicke in einem Bereich zwischen 75 Mikrometern und 150 Mikrometern aufweist. Denn auf diese Weise kann beispielsweise ein Grundkörper eines Vakuumkörpers aus einem stabilen Kunststoff, dessen Dicke größer als 150 µm betragen kann, gefertigt werden, während zum Zwecke der Druckerfassung ein weiterer Außenhüllenbereich vorgesehen sein kann, welcher beispielsweise aus einer Kunststofffolie bestehen kann. So kann die Kunststofffolie beispielsweise bei einer Druckdifferenzmessung abheben, was auf einen Druck in dem Vakuumkörper schließen lässt.

Gemäß einem Aspekt betrifft die Erfindung ein Kältegerät mit einem Gehäuse, das zumindest einen Vakuumkörper aufweist. Dabei kann trotz beispielsweise einer stabileren Bauweise des ersten Außenhüllenbereichs eine Druckmessung unter Anwendung bekannter Druckmessverfahren auf dem zweiten Außenhüllenbereich durchgeführt werden.

Indem der zweite Außenhüllenbereich eine geringere Dicke aufweist als der erste Außenhüllenbereich, können Außenhüllenbereiche unterschiedlicher Elastizität bereitgestellt werden.

Indem der erste Außenhüllenbereich eine Dicke aufweist, welche größer als 150 µm ist, kann eine im Vergleich zu einer Folie größere Stabilität des ersten Außenhüllenbereichs erreicht werden.

Indem der zweite Außenhüllenbereich eine Dicke aufweist, welche in einem Bereich zwischen 75 µm und 150 µm liegt, entspricht diese Dicke einer Dicke einer Folie.

Gemäß einer Ausführungsform bildet oder umhüllt der erste Außenhüllenbereich einen Vakuumgrundkörper mit einer Öffnung, welche durch den zweiten Außenhüllenbereich geschlossen ist. Der Vakuumkörper ist somit vakuumsdicht und umfasst insgesamt eine geschlossene Außenhülle, welche jedoch örtlich unterschiedliche Elastizitäten aufweisen kann, was die Anwendung bekannter Druckmessverfahren ermöglicht.

Gemäß einer Ausführungsform formt der erste Außenhüllenbereich eine einseitig offene Wanne, welche durch den zweiten Außenhüllenbereich abgeschlossen ist. Die Wanne umfasst beispielsweise eine Bodenwandung und Seitenwandungen, während der zweite Außenhüllenbereich sich zwischen den Seitenwänden erstreckt, so dass der Vakuumkörper vakuumsdicht ist.

Gemäß einer Ausführungsform umfasst der erste Außenhüllenbereich ein Fenster, das durch den zweiten Außenhüllenbereich geschlossen ist. Das Fenster kann beispielsweise als ein Durchbruch in dem zweiten Außenhüllenbereich gebildet sein, welcher durch den zweiten Außenhüllenbereich geschlossen ist.

Gemäß einer Ausführungsform umfasst der Vakuumkörper eine Bodenwand Seitenwände und eine Deckenwand. Dabei bildet der erste Außenhüllenbereich die Bodenwand und die Seitenwände. Die Deckenwand ist hingegen durch den zweiten Außenhüllenbereich gebildet.

Der Vakuumkörper kann somit einen rechteckförmigen Querschnitt aufweisen, wobei eine Rechteckseite zumindest teilweise elastischer als die übrigen Rechteckseiten sein kann.

Gemäß einer Ausführungsform ist der zweite Außenhüllenbereich an den ersten Außenhüllenbereich befestigt. Diese Befestigung kann beispielsweise mittels Klebung oder mittels einer Schweißnaht realisiert werden.

Gemäß einer alternativen Ausführungsform formen der erste Außenhüllenbereich und der zweite Außenhüllenbereich einen einstückigen Außenhüllenbereich. In diesem Fall können die Außenhüllenbereiche unterschiedlicher Elastizität beispielsweise durch eine Dickenvariierung realisiert werden.

Gemäß einer Ausführungsform sind der erste Außenhüllenbereich und der zweite Außenhüllenbereich aus Kunststoff geformt. Der erste und der zweite Außenhüllenbereich können aus demselben Kunststoff oder auch aus unterschiedlichen Kunststoffen geformt sein.

Gemäß einer Ausführungsform ist der erste Außenhüllenbereich aus einem Multilayer-Kunststoff geformt.

Gemäß einer Ausführungsform ist der zweite Außenhüllenbereich aus Polyethylen oder Polypropylen geformt.

Gemäß einer Ausführungsform ist der zweite Außenhüllenbereich eine Kunststofffolie oder weist eine Kunststofffolie auf.

Gemäß einer Ausführungsform ist die Außenhülle mit Füllmaterial, welches porös sein kann und eine geringe Wärmeleitfähigkeit, welche vergleichbar mit einer Wärmeleitfähigkeit einer herkömmlichen Dämmplatte ist, gefüllt.

Gemäß einem weiteren Aspekt betrifft die Erfindung ein Verfahren zum Herstellen eines Kältegerätes mit einem Gehäuse, das zumindest einen erfindungsgemäßen Vakuumkörper aufweist. Das Verfahren umfasst das Ausbilden des ersten Außenhüllenbereichs, beispielsweise durch ein Tiefziehen eines Kunststoffs, und das Verbinden des zweiten Außenhüllenbereichs mit dem ersten Außenhüllenbereich, beispielsweise durch Schweißen.

Das erfindungsgemäße Kältegerät kann insbesondere zumindest eine Tür aufweisen, die einen der erfindungsgemäßen Vakuumkörper umfasst. Vorteilhafterweise kann die Tür durch einen der erfindungsgemäßen Vakuumkörper gebildet sein. Insbesondere kann eine Wandseite der Tür durch den ersten Außenhüllenbereich des Vakuumkörpers gebildet sein. Es ist aber auch möglich, dass der erste Außenhüllenbereich noch mit einer Dekorationsschicht versehen ist.

Weitere Ausführungsbeispiele werden Bezug nehmend auf die beiliegenden Zeichnungen erläutert. Es zeigen:
- Fig. 1: einen Querschnitt eines Vakuumkörpers gemäß einer Ausführungsform;
- Fig. 2: einen Querschnitt eines Vakuumkörpers gemäß einer Ausführungsform;
- Fig. 3: einen Querschnitt eines Vakuumkörpers gemäß einer Ausführungsform; und
- Fig. 4: einen Querschnitt eines Vakuumkörpers gemäß einer Ausführungsform.

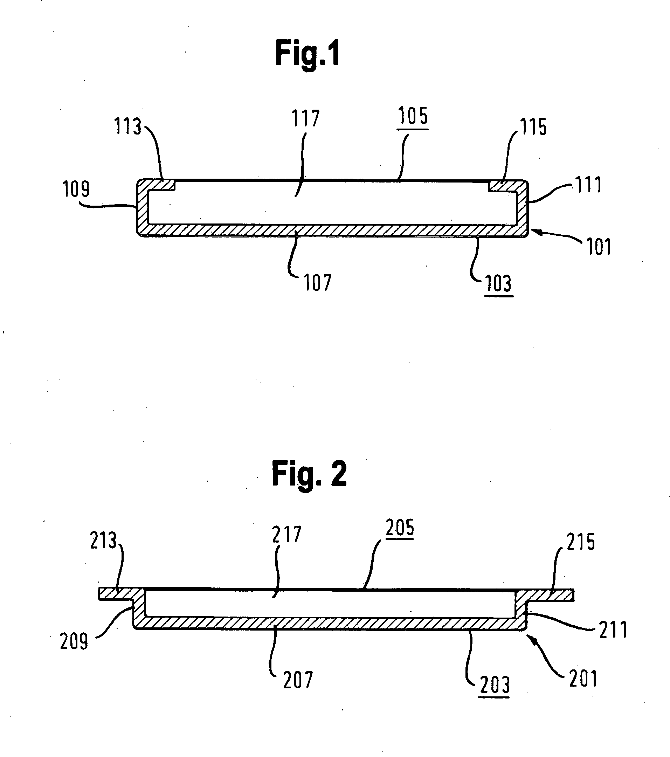

Fig. 1 zeigt einen Querschnitt eines Vakuumkörpers mit einer Außenhülle 101, welche einen ersten Außenhüllenbereich 103 und einen zweiten Außenhüllenbereich 105 aufweist. Der zweite Außenhüllenbereich 105 weist eine Elastizität auf, welche höher als eine Elastizität des ersten Außenhüllenbereichs 103 ist. Beispielsweise ist der zweite Außenhüllenbereich 105 dünner als der erste Außenhüllenbereich 103.

Der erste Außenhüllenbereich 103 kann beispielsweise wannenförmig geformt sein und eine Bodenwandung 107 und Seitenwände 109 und 111 aufweisen. Die Seitenwände 109 und 111 können ferner nach innen weisende abgewinkelte Abschnitte 113 und 115 aufweisen, welche eine Öffnung definieren, welche mittels des zweiten Außenhüllenbereichs 105 verschlossen ist. Der Vakuumkörper ist somit vakuumsdicht. Optional kann der Vakuumkörper mit einem porösen Material 117, beispielsweise mit einem porösen Stützmaterial, gefüllt sein.

Fig. 2 zeigt einen Vakuumkörper mit einer Außenhülle 201, welche einen wannenförmig geformten ersten Außenhüllenbereich 203 und einen diesen verschließenden zweiten Außenhüllenbereich 205 aufweist. Der zweite Außenhüllenbereich 205 weist eine Elastizität auf, welche größer als eine Elastizität des ersten Außenhüllenbereichs 203 ist.

Der erste Außenhüllenbereich 203 umfasst eine Bodenwand 207 sowie Seitenwände 209 und 211, welche jeweils nach außen abgewinkelte Abschnitte 213 und 215 aufweisen. Der zweite Außenhüllenbereich 205 verbindet die nach außen abgewinkelten Abschnitte 213 und 215 und verschließt somit den Vakuumkörper vakuumsdicht.

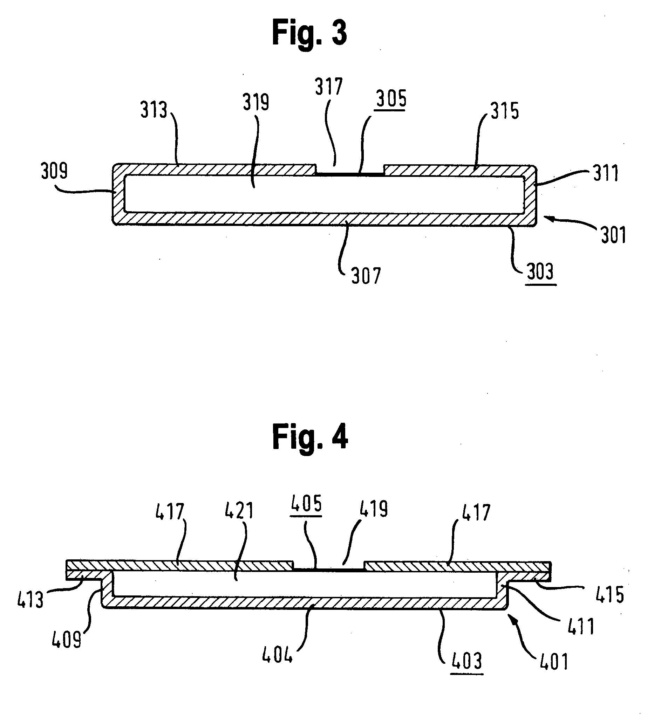

Fig. 3 zeigt einen Vakuumkörper mit einer Außenhülle 301, welche einen ersten Außenhüllenbereich 303 und einen zweiten Außenhüllenbereich 305 aufweist. Der erste Außenhüllenbereich 303 umfasst eine Bodenwand 307 sowie Seitenwände 309 und 311. Die Seitenwände 309 und 311 sind jeweils mit nach innen weisenden, abgewinkelten Abschnitten 313 sowie 315 versehen, welche weiter nach innen gezogen sind als es in dem in Fig. 1 dargestellten Ausführungsbeispiel gezeigt ist. Dadurch entsteht mittig ein Fenster 317, das durch den zweiten Außenhüllenbereich 305 verschlossen ist. Das Fenster 317 kann beispielsweise auch als ein Durchbruch in dem ersten Außenhüllenbereich 303 verstanden werden. Der Vakuumkörper ist beispielsweise mit einem porösen Material 319 gefüllt.

Fig. 4 zeigt einen Vakuumkörper mit einer Außenhülle 401, welche einen ersten Außenhüllenbereich 403 und einen zweiten Außenhüllenbereich 405 aufweist. Der erste Außenhüllenbereich 403 umfasst eine Bodenwind 407 sowie Seitenwände 409 und 411. Seitlich von den Außenwänden 409 und 411 erstrecken sich nach außen beispielsweise senkrecht zu den Seitenwänden 409 und 411 Seitenbereiche 413 sowie 415. Der Vakuumkörper ist mit einem Deckel 417 abgeschlossen, welcher auf den Seitenbereichen 413 und 415 aufliegt und einen Durchbruch 419 aufweist, welches ein Fenster bildet, das durch den zweiten Außenhüllenbereich 405 verschlossen ist. Optional kann der Vakuumkörper mit einem porösen Füll- bzw. Stützmaterial 421 gefüllt sein.

Der in den Fig. 1 bis 4 jeweils dargestellte erste Außenhüllenbereich kann jeweils durch Tiefziehen eines Kunststoffs mit einer Dicke von zumindest 150 µm und mehr hergestellt sein, wobei der Kunststoff ein Multilayer-Kunststoff sein kann.

Beispielsweise ist nur eine Seite des Vakuumkörpers mit beispielsweise einer dünnen Folie versehen, welche jeweils den zweiten Außenhüllenbereich formt. Die dünne Folie kann beispielsweise dieselbe Folie sein, welche zur Herstellung von Folien-Vakuumpaneelen herangezogen wird. Sollte die Folie, welche den zweiten Außenhüllenbereich formt, luftpermeabel sein, so kann deren Oberfläche, wie es beispielsweise in den Fig. 2 bis 4 dargestellt ist, verringert werden, um die durch den zweiten Außenhüllenbereich hindurch tretende Luftmenge zu verringern.

Der zweite Außenhüllenbereich kann beispielsweise auf seiner Innenseite eine Polyethylen- oder eine Polypropylenschicht aufweisen, welche sich mit einer Polyethylen- oder einer Polypropylenschicht des beispielsweise als Folie gebildeten zweiten Außenhüllenbereich über beispielsweise ein Wärmekontaktschweißen oder über andere Kunststoff-Fügeverfahren, wie beispielsweise Reibschweißen, leicht verbinden.

### BEZUGSZEICHENLISTE

- 101: Außenhülle
- 103: erster Außenhüllenbereich
- 105: zweiter Außenhüllenbereich
- 107: Bodenwandung
- 109: Seitenwand
- 111: Seitenwand
- 113: Abschnitt
- 115: Abschnitt
- 117: poröses Material
- 201: Außenhülle
- 203: erster Außenhüllenbereich
- 205: zweiter Außenhüllenbereich
- 207: Bodenwand
- 209: Seitenwand
- 211: Seitenwand
- 213: Abschnitt
- 215: Abschnitt
- 301: Außenhülle
- 303: erster Außenhüllenbereich
- 305: zweiter Außenhüllenbereich
- 307: Bodenwand
- 309: Seitenwand
- 311: Seitenwand
- 313: Abschnitt
- 315: Abschnitt
- 317: Fenster
- 319: poröses Material
- 401: Außenhülle
- 403: erster Außenhüllenbereich
- 405: zweiter Außenhüllenbereich
- 407: Bodenwand
- 409: Seitenwand
- 411: Seitenwand
- 413: Seitenbereich
- 415: Seitenbereich
- 417: Deckel
- 419: Durchbruch
- 421: Stützmaterial

## Patentansprüche

1. Kältegerät mit einem Gehäuse, das Gehäuse aufweisend zumindest einen Vakuumkörper mit einer Außenhülle (101, 201, 301, 401), wobei die Außenhülle (101, 201, 301, 401) einen ersten Außenhüllenbereich (103, 203, 303, 403) und einen zweiten Außenhüllenbereieh (105, 205, 305, 405) aufweist, welcher elastischer als der erste Außenhüllenbereich (103, 203, 303, 403) ist und eine geringere Dicke als der erste Außenhüllenbereich (103, 203, 303, 403) aufweist, wobei der erste Außenhüllenbereich (103, 203, 303, 403) eine Dicke aufweist, welche größer als 150 Mikrometer ist, und wobei der zweite Außenhüllenbereich (105, 205, 305, 405) eine Dicke in einem Bereich zwischen 75 Mikrometern und 150 Mikrometern aufweist.

2. Kältegerät nach Anspruch 1, **dadurch gekennzeichnet, dass** der erste Außenhüllenbereich (103, 203, 303, 403) einen Vakuumgrundkörper mit einer Öffnung bildet, und dass der zweite Außenhüllenbereich (105, 205, 305, 405) die Öffnung schließt.

3. Kältegerät nach einem der vorhergehenden Ansprüche, **dadurch gekennzeichnet, dass** der erste Außenhüllenbereich (103, 203, 303, 403) eine einseitig offene Wanne formt, und dass der zweite Außenhüllenbereich (105, 205, 305, 405) die Wanne abschließt.

4. Kältegerät nach einem der vorhergehenden Ansprüche, **dadurch gekennzeichnet, dass** der erste Außenhüllenbereich (103, 203, 303, 403) ein Fenster aufweist, und dass der zweite Außenhüllenbereich (105, 205, 305, 405) das Fenster schließt.

5. Kältegerät nach einem der vorhergehenden Ansprüche, **dadurch gekennzeichnet, dass** der erste Außenhüllenbereich (103, 203, 303, 403) eine Bodenwand und Seitenwände aufweist, und dass eine Deckenwand durch den zweiten Außenhüllenbereich (105, 205, 305, 405) gebildet ist.

6. Kältegerät nach einem der vorhergehenden Ansprüche, **dadurch gekennzeichnet, dass** der zweite Außenhüllenbereich (105, 205, 305, 405) an dem ersten Außenhüllenbereich (103, 203, 303, 403) befestigt ist, insbesondere mittels einer Schweißnaht befestigt ist.

7. Kältegerät nach einem der vorhergehenden Ansprüche 1 bis 5, **dadurch gekennzeichnet, dass** der erste Außenhüllenbereich (103, 203, 303, 403) und der zweite Außenhüllenbereich (105, 205, 305, 405) einen einstückigen Außenhüllenbereich formen.

8. Kältegerät nach einem der vorhergehenden Ansprüche, **dadurch gekennzeichnet, dass** der erste Außenhüllenbereich (103, 203, 303, 403) und der zweite Aüßenhüllenbereich (105, 205, 305, 405) aus Kunststoff, insbesondere aus unterschiedlichen Kunststoffen, geformt sind.

9. Kältegerät nach einem der vorhergehenden Ansprüche, **dadurch gekennzeichnet, dass** der erste Außenhüllenbereich (103, 203, 303, 403) aus einem Multilayer-Kunststoff geformt ist.

10. Kältegerät nach einem der vorhergehenden Ansprüche, **dadurch gekennzeichnet, dass** der zweite Außenhüllenbereich (105, 205, 305, 405) aus Polyethylen oder aus Polypropylen geformt ist.

11. Kältegerät nach einem der vorhergehenden Ansprüche, **dadurch gekennzeichnet, dass** eine Innenwand des ersten Außenhüllenbereichs mit einer Kunststofffolie versehen oder ausgekleidet oder bedeckt ist.

12. Kältegerät nach einem der vorhergehenden Ansprüche, **dadurch gekennzeichnet, dass** der zweite Außenhüllenbereich (105, 205, 305, 405) eine Kunststofffolie aufweist.

13. Kältegerät nach einem der vorhergehenden Ansprüche, **dadurch gekennzeichnet, dass** die Außenhülle (101, 201, 301, 401) mit Füllmaterial gefüllt ist.

14. Kältegerät nach einem der vorhergehenden Ansprüche, **dadurch gekennzeichnet, dass** das Kältegerät eine Tür aufweist, die durch den Vakuumkörper gebildet ist, insbesondere dass eine Wandseite der Tür durch den ersten Außenhüllenbereich des Vakuumkörpers gebildet ist.

15. Verfahren zum Herstellen des Vakuumkörpers des Kältegerätes nach einem der vorhergehenden Ansprüche, **gekennzeichnet durch**:
Ausbilden des ersten Außenhüllenbereichs **durch** ein Tiefziehen eines Kunststoffs; und Verbinden des zweiten Außenhüllenbereichs mit dem ersten Außenhüllenbereich, insbesondere **durch** Schweißen.

## Claims

1. Refrigerator with a housing, the housing having at least one vacuum body with an outer shell (101, 201, 301, 401), wherein the outer shell (101, 201, 301, 401) has a first outer shell region (103, 203, 303, 403) and a second outer shell region (105, 205, 305, 405) which is more elastic than the first outer shell region (103, 203, 303, 403) and has a smaller thickness than the first outer shell region (103, 203, 303, 403), wherein the first outer shell region (103, 203, 303, 403) has a thickness which is greater than 150 micrometres and wherein the second outer shell region (105, 205, 305, 405) has a thickness ranging from 75 micrometres to 150 micrometres.

2. Refrigerator according to claim 1, **characterised in that** the first outer shell region (103, 203, 303, 403) forms a basic vacuum body with an opening and that the second outer shell region (105, 205, 305, 405) closes the opening:

3. Refrigerator according to one of the preceding claims, **characterised in that** the first outer shell region (103, 203, 303, 403) forms a trough open on one side and the second outer shell region (105, 205, 305, 405) closes the trough.

4. Refrigerator according to one of the preceding claims, **characterised in that** the first outer shell region (103, 203, 303, 403) has a window and that the second outer shell region (105, 205, 305, 405) closes the window.

5. Refrigerator according to one of the preceding claims, **characterised in that** the first outer shell region (103, 203, 303, 403) has a floor and side walls and that a roof wall is formed by the second outer shell region (105, 205, 305, 405).

6. Refrigerator according to one of the preceding claims, **characterised in that** the second outer shell region (105, 205, 305, 405) is fastened to the first outer shell region (103, 203, 303, 403), in particular is fastened by means of a weld seam.

7. Refrigerator according to one of the preceding claims 1 to 5, **characterised in that** the first outer shell region (103, 203, 303, 403) and the second outer shell region (105, 205, 305, 405) form a one-piece outer shell region.

8. Refrigerator according to one of the preceding claims, **characterised in that** the first outer shell region (103, 203, 303, 403) and the second outer shell region (105, 205, 305, 405) are moulded from plastic, especially from different plastics.

9. Refrigerator according to one of the preceding claims, **characterised in that** the first outer shell region (103, 203, 303, 403) is moulded from a multilayer plastic.

10. Refrigerator according to one of the preceding claims, **characterised in that** the second outer shell region (105, 205, 305, 405) is moulded from polyethylene or from polypropylene.

11. Refrigerator according to one of the preceding claims, **characterised in that** an inner wall of the first outer shell region is provided with a plastic film or is clad or covered therewith.

12. Refrigerator according to one of the preceding claims, **characterised in that** the second outer shell region (105, 205, 305, 405) has a plastic film.

13. Refrigerator according to one of the preceding claims, **characterised in that** the outer shell (101, 201, 301, 401) is filled with filler material.

14. Refrigerator according to one of the preceding claims, **characterised in that** the refrigeration appliance has a door which is formed by the vacuum body, in particular that a wall side of the door is formed by the first outer shell region of the vacuum body.

15. Method for manufacturing a vacuum body of a refrigeration appliance according to one of the preceding claims, **characterised by**:
Forming the first outer shell region by deep-drawing of a plastic;
and connection of the second outer shell region with the first outer shell region by welding.

## Revendications

1. Appareil frigorifique comprenant un boîtier, le boîtier présentant au moins un corps sous vide muni d'une enveloppe extérieure (101, 201, 301, 401), l'enveloppe extérieure (101, 201, 301, 401) présentant une première zone d'enveloppe extérieure (103, 203, 303, 403) et une deuxième zone d'enveloppe extérieure (105, 205, 305, 405), laquelle est plus élastique que la première zone d'enveloppe extérieure (103, 203, 303, 403, 503) et présente une épaisseur plus petite que la première zone d'enveloppe extérieure (103, 203, 303, 403), la première zone d'enveloppe extérieure (103, 203, 303, 403) présentant une épaisseur qui est supérieure à 150 micromètres, et la deuxième zone d'enveloppe extérieure (105, 205, 305, 405) présentant une épaisseur dans une plage comprise entre 75 micromètres et 150 micromètres.

2. Appareil frigorifique selon la revendication 1, **caractérisé en ce que** la première zone d'enveloppe extérieure (103, 203, 303, 403) forme un corps de base sous vide muni d'une ouverture, et **en ce que** la deuxième zone d'enveloppe extérieure (105, 205, 305, 405) obture l'ouverture.

3. Appareil frigorifique selon l'une quelconque des revendications précédentes, **caractérisé en ce que** la première zone d'enveloppe extérieure (103, 203, 303, 403) forme une cuve ouverte d'un côté, et **en ce que** la deuxième zone d'enveloppe extérieure (105, 205, 305, 405) obture la cuve.

4. Appareil frigorifique selon l'une quelconque des revendications précédentes, **caractérisé en ce que** la première zone d'enveloppe extérieure (103, 203, 303, 403) présente une fenêtre, et **en ce que** la deuxième zone d'enveloppe extérieure (105, 205, 305, 405) obture la fenêtre.

5. Appareil frigorifique selon l'une quelconque des revendications précédentes, **caractérisé en ce que** la première zone d'enveloppe extérieure (103, 203, 303, 403) présente une paroi de fond et des parois latérales, et **en ce qu'**une paroi de plafond est formée par la deuxième zone d'enveloppe extérieure (105, 205, 305, 405).

6. Appareil frigorifique selon l'une quelconque des revendications précédentes, **caractérisé en ce que** la deuxième zone d'enveloppe extérieure (105, 205, 305, 405) est fixée sur la première zone d'enveloppe extérieure (103, 203, 303, 403), notamment fixée au moyen d'une soudure.

7. Appareil frigorifique selon l'une quelconque des revendications 1 à 5, **caractérisé en ce que** la première zone d'enveloppe extérieure (103, 203, 303, 403) et la deuxième zone d'enveloppe extérieure (105, 205, 305, 405) forment une zone d'enveloppe extérieure d'une seule pièce.

8. Appareil frigorifique selon l'une quelconque des revendications précédentes, **caractérisé en ce que** la première zone d'enveloppe extérieure (103, 203, 303, 403) et la deuxième zone d'enveloppe extérieure (105, 205, 305, 405) sont formées en matière plastique, notamment à partir de différentes matières plastiques.

9. Appareil frigorifique selon l'une quelconque des revendications précédentes, **caractérisé en ce que** la première zone d'enveloppe extérieure (103, 203, 303, 403) est formée par une matière plastique multicouches.

10. Appareil frigorifique selon l'une quelconque des revendications précédentes, **caractérisé en ce que** la deuxième zone d'enveloppe extérieure (105, 205, 305, 405) est formée en polyéthylène ou polypropylène.

11. Appareil frigorifique selon l'une quelconque des revendications précédentes, **caractérisé en ce qu'**une paroi intérieure de la première zone d'enveloppe extérieure est munie ou revêtue ou recouverte d'une feuille plastique.

12. Appareil frigorifique selon l'une quelconque des revendications précédentes, **caractérisé en ce que** la deuxième zone d'enveloppe extérieure (105, 205, 305, 405) présente une feuille plastique.

13. Appareil frigorifique selon l'une quelconque des revendications précédentes, **caractérisé en ce que** l'enveloppe extérieure (101, 201, 301, 401) est remplie avec une matière de remplissage.

14. Appareil frigorifique selon l'une quelconque des revendications précédentes, **caractérisé en ce que** l'appareil frigorifique présente une porte qui est formée par le corps sous vide, notamment **en ce qu'**un côté en paroi de la porte est formé par la première zone d'enveloppe extérieure du corps sous vide.

15. Procédé de fabrication du corps sous vide de l'appareil ménager selon l'une quelconque des revendications précédentes, **caractérisé par** :
formation de la première zone d'enveloppe extérieure par un emboutissage d'une matière plastique ;
et assemblage de la deuxième zone d'enveloppe extérieure à la première zone d'enveloppe extérieure, notamment par soudure.
